# FASCICULE DE BREVET EUROPEEN

(11) **EP 3 877 974 B1**
(45) Date de publication et mention de la délivrance du brevet: **03.04.2024**
(21) Numéro de dépôt: 19813073.4
(22) Date de dépôt: 18.10.2019
(51) Int. Cl.: G10L 15/22, G10L 15/30, G06F 3/16

(54) **PROCÉDÉ ET DISPOSITIF D'ASSISTANCE À L'UTILISATION D'UN ASSISTANT VOCAL DANS UN VÉHICULE**
VERFAHREN UND VORRICHTUNG ZUR UNTERSTÜTZUNG BEI DER VERWENDUNG EINES SPRACHASSISTENTEN IN EINEM FAHRZEUG
METHOD AND DEVICE FOR ASSISTANCE WITH THE USE OF A VOICE ASSISTANT IN A VEHICLE

(30) Priorité: 09.11.2018 FR 1871438
(43) Date de publication de la demande: 15.09.2021
(73) Titulaire: Stellantis Auto SAS, 78300 Poissy (FR)
(72) Inventeur: BEZAT, Marie Celine, 75011 PARIS 11 (FR); FROMION, Alexandre, 92160 ANTONY (FR)
(86) Numéro de dépôt international: PCT/FR2019/052484
(87) Numéro de publication internationale: WO 2020/094939

(56) Documents cités:
- US-A1- 2015 120 296
- US-A1- 2018 075 842
- US-B2- 8 812 326

## Description

### Domaine technique de l'invention

La présente invention se rapporte de manière générale à l'utilisation d'assistants vocaux à bord d'un véhicule automobile.

### Etat de la technique

Les assistants personnels virtuels (APV) ou assistants personnels intelligents (API) sont des dispositifs essentiellement logiciels qui permettent d'exécuter des tâches ou de fournir des services spécifiques à leurs utilisateurs. Ils utilisent pour cela des informations telles que le contexte de leur utilisation (le lieu, la date...), un profil d'utilisateur (son identité, un historique de son usage antérieur, etc.) et des données d'entrée fournies par l'utilisateur (i.e. des requêtes spécifiques). Ils permettent ainsi de fournir à chaque utilisateur une assistance pertinente et personnalisée.

Ces APV sont typiquement intégrés à des équipements dits équipements intelligents tels que les appareils nomades et communicants comme les smartphones ou les tablettes, ou d'autres appareils connectés, que ce soit à la maison ou dans un véhicule, par exemple. Dans tous les cas, ils sont exécutés par une unité de traitement (i.e. un calculateur) de l'équipement intelligent dans lequel ils sont intégrés.

Il existe un très grand nombre d'APV qui adressent des usages différents en fonction des services et des contextes d'utilisation respectivement concernés. C'est le cas, par exemple, de Siri^{®}, de Google Assistant^{®}, d'Alexa^{®} ou encore de Cortana^{®}, qui sont proposés par différents fournisseurs et sur différents types ou modèles d'équipements.

Pour rendre leur utilisation plus ergonomique, la plupart des APV récents peuvent aussi être contrôlés vocalement, c'est-à-dire par la voix de l'utilisateur. Par « contrôlé » on entend à la fois le fait d'être activé et celui d'être commandé par l'intermédiaire de requêtes exprimées oralement par l'utilisateur. Une fonction de reconnaissance vocale est alors couplée à l'APV. Elle s'exécute sur l'unité de traitement de l'équipement intelligent qui intègre l'APV et permet de reconnaître des mots prononcés par un utilisateur. Une séquence de mots reconnus peut être transmise à l'APV qui les analyse pour en déduire la requête exprimée par l'utilisateur et exécuter ensuite la tâche ou le service correspondant.

Le contrôle vocal d'un APV est particulièrement utile à bord d'un véhicule automobile, où l'aspect mains libres est favorable à la sécurité. Le conducteur peut en effet activer une fonctionnalité ou un service sans utiliser ses mains qui demeurent libres pour la conduite, ni détourner le regard de la route en sorte que sa vigilance est peu affectée. C'est pourquoi le véhicule peut embarquer un APV qui est exécuté par un équipement d'un véhicule et qui peut être contrôlé vocalement et/ou par l'intermédiaire d'un dispositif d'interface homme/machine du véhicule (boutons du tableau de bord, et/ou clavier virtuel d'un écran tactile de l'ordinateur de bord, par exemple). Le document de brevet US 2018/075842 A1 montre un tel système.

Les systèmes de reconnaissance vocal en véhicule s'appuient sur des ressources embarquées et des ressources débarquées avec une capacité de calcul bien supérieur. L'avantage des ressources embarquées est qu'elles assurent une continuité de service dans les zones grises, l'avantage des ressources débarquées est d'offrir une prestation plus performante en capacité de traitement du langage naturel et domaines couverts.

Sans connexion avec les ressources débarquées, le système de reconnaissance vocale est donc moins performant. Cela peut alors engendrer des déceptions d'un utilisateur, lorsque le système ne répond pas ou mal à des questions de son périmètre. Par exemple avec un tel système, si l'utilisateur demande à « naviguer vers l'aéroport Charles de gaulle' », celui-ci accède à un guidage vers l'aéroport Charles de gaulle en mode connecté ; mais il récupère une liste d'aéroports dans des villes proches de "de gaulle" en mode non connecté.

### Exposé de l'invention

L'invention a donc pour but d'améliorer la situation. Elle propose plus précisément à cet effet un procédé d'assistance à l'utilisation d'un assistant vocal comportant un module de reconnaissance vocale apte à exécuter une fonction reconnaissance vocale sur au moins un calculateur embarqué (12) du véhicule ou sur au moins un calculateur distant (14), le module étant apte à communiquer avec ledit au moins un calculateur distant (14), par l'intermédiaire d'une liaison sans fils (15), de façon à lui transmettre un signal représentatif de paroles à reconnaitre, caractérisé en ce qu'il comporte des étapes de :
- Réception (21) de données relatives à la liaison sans fils (15),
- Détermination (22) d'un indicateur de performance relatif à la reconnaissance vocale, à partir de données relatives à la liaison dans fils (15),
- Détermination (23) d'un objet graphique ou d'un message associé audit niveau de performance déterminé,
- Affichage (24) de l'objet graphique ou du message déterminé, de façon à informer un utilisateur de la performance de la reconnaissance vocale et
en ce qu'il comprend en outre une étape de réception (25) de données relatives à un état du au moins un calculateur mettant en oeuvre la fonction de reconnaissance vocale et en ce que la détermination d'un indicateur de performance prend aussi en compte les données relatives à un état du au moins un calculateur.

Avec l'invention, l'utilisateur est informé du niveau de performance de la reconnaissance vocale. En cas d'insatisfaction avec la réponse proposée, l'utilisateur peut choisir de différer sa demande et attendre que le système se trouve en mode connecté et soit donc plus performent.

Avantageusement, les données relatives à la liaison sans fils comportent au moins l'une des données suivantes : une bande passante, une latence, un taux d'erreur.

Avantageusement, si l'indicateur de performance correspond à un niveau pour lequel la reconnaissance vocale est effectuée par le calculateur distant, alors l'objet graphique ou le message correspondant indique à l'utilisateur que l'agent fonctionne dans un mode nominal.

Avantageusement, si l'indicateur de performance correspond à un niveau pour lequel la reconnaissance est effectuée par calculateur embarqué, alors l'objet graphique ou le message correspondant indique à l'utilisateur que l'agent fonctionne dans un mode dégradé.

Avantageusement, si l'indicateur de performance comporte un niveau pour lequel le calculateur embarqué est dans une phase de démarrage, alors l'objet graphique ou le message correspondant indique à l'utilisateur que l'agent est dans une phase de réveil.

L'invention concerne aussi un programme d'ordinateur comportant des instructions pour mettre en oeuvre le procédé d'assistance à l'utilisation d'un assistant vocal selon l'invention, lorsqu'il est exécuté sur un ou plusieurs processeurs.

L'invention concerne aussi un dispositif d'assistance à l'utilisation d'un assistant vocal caractérisé en ce qu'il est configuré pour mettre en oeuvre le procédé d'assistance à l'utilisation d'un assistant vocal selon l'invention.

L'invention concerne aussi un véhicule caractérisé en ce qu'il comporte un dispositif selon la revendication précédente.

### Brève description des figures

D'autres caractéristiques et avantages de l'invention apparaîtront à l'examen de la description détaillée ci-après, et des dessins annexés, sur lesquels:
[Fig 1] illustre un diagramme montrant une schématique d'un dispositif selon l'invention ;
[Fig 2] illustre un logigramme montrant les étapes de l'invention ;
[Fig 3] représente un exemple de dispositif d'assistance à l'utilisation d'un assistant vocal selon l'invention.

Les dessins annexés pourront non seulement servir à compléter l'invention, mais aussi contribuer à sa définition, le cas échéant.

### Description détaillée de l'invention

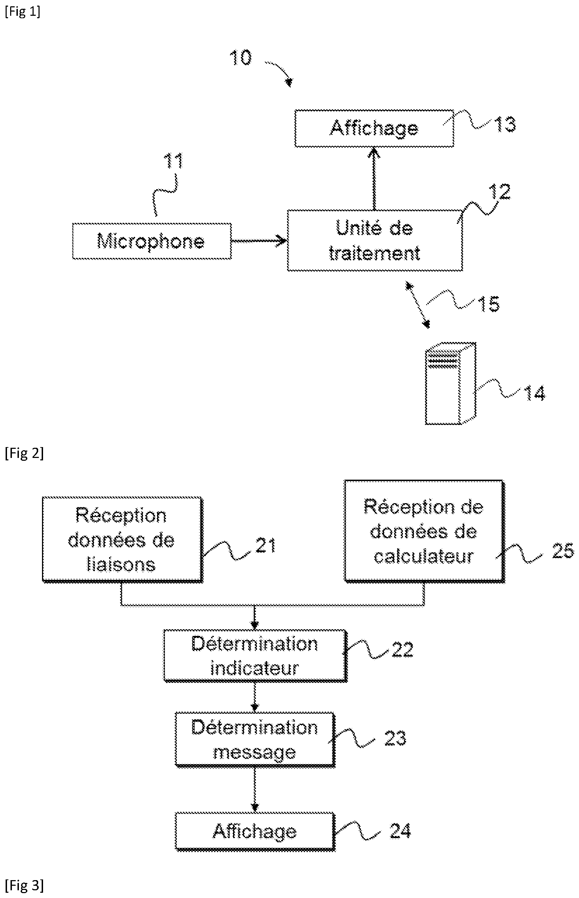

En référence à la figure 1, le dispositif 10 de traitement de la parole d'un utilisateur (ou assistant vocal personnel) comporte : un microphone 11, une unité de traitement 12, un moyen d'affichage 13.

Le microphone 11 permet d'enregistrer la parole d'un utilisateur situé dans l'habitacle du véhicule.

L'unité de traitement 12 est un calculateur, comprenant une mémoire et un processeur, apte à exécuter ou à commander l'exécution d'une fonction de reconnaissance vocale. L'unité de traitement 12 est reliée au microphone 11 et est apte à commander le moyen d'affichage 13.

La fonction de reconnaissance vocale est une fonction connue de l'état de la technique qui permet de reconnaître des mots à partir d'une parole prononcée par un utilisateur et préalablement numérisée.

Le moyen d'affichage 13, par exemple un écran LCD, permet notamment d'afficher des mots reconnus par la fonction de reconnaissance vocale.

L'assistant vocal 10 comportant un module de reconnaissance vocale apte à exécuter une fonction reconnaissance vocale sur au moins un calculateur embarqué 12 du véhicule ou sur au moins un calculateur distant 14. Le module de reconnaissance vocale est apte à communiquer avec ledit au moins un calculateur distant (14), par l'intermédiaire d'une liaison sans fils 15 de façon à lui transmettre un signal représentatif de paroles à reconnaitre.

La liaison sans fil est par exemple type liaison cellulaire de type 3G ou 4G.

L'invention concerne aussi un procédé d'assistance à l'utilisation d'un assistant vocal. En référence à la figure 2, le procédé comporte les étapes suivantes.

Le procédé selon l'invention comporte une étape de réception 21 de données relatives à la liaison sans fils 15. Ces données sont par exemple une bande passante, une latence, un taux d'erreur.

Le procédé comporte ensuite la détermination 22 d'un indicateur de performance à partir de données relatives à la liaison dans fils 15. L'indicateur est établi par exemple par comparaison de la (ou des) donnée(s) avec d'une (ou de) valeur(s) seuils de référence.

Le procédé comporte ensuite la détermination 23 d'un objet graphique ou d'un message associé audit niveau de performance déterminé. Le procédé comporte ou le message est déterminé à partir du niveau de performance par exemple à l'aide d'une table d'association prédéterminée entre les objets graphiques et/ou les messages, d'une part, et un niveau de performance, d'autre part.

Par exemple, si l'indicateur de performance correspond à une bonne connexion alors l'avatar correspondant indique un « mode cloud ». Autrement dit, si l'indicateur de performance correspond à un niveau pour lequel la reconnaissance est effectuée par le calculateur distant l'indication correspondante indique à l'utilisateur que l'agent fonctionne dans un mode nominal.

Par exemple, si l'indicateur de performance correspond à une mauvaise connexion alors l'avatar correspondant indique un mode dégradé de sorte que l'utilisateur s'attend à une réponse partielle et plus lente.

Par exemple, si l'indicateur de performance correspond à une phase de boot (autrement dit de chargement ou de réveil) du calculateur, l'avatar correspondant indique un avatar en mode réveil de sorte que l'utilisateur s'attend à une réponse partielle.

Le procédé comporte un affichage 24 du l'objet graphique ou du message déterminé.

L'affichage du symbole ou du message permet d'alerter l'utilisateur sur la performance du système de reconnaissance.

Avantageusement, le procédé d'assistance selon l'invention comprend en outre une étape de réception 25 de données relatives à un état du au moins un calculateur mettant en oeuvre la fonction de reconnaissance vocale. Dans ce cas, la détermination d'un indicateur de performance prend aussi en compte les données relatives à un état du au moins un calculateur.

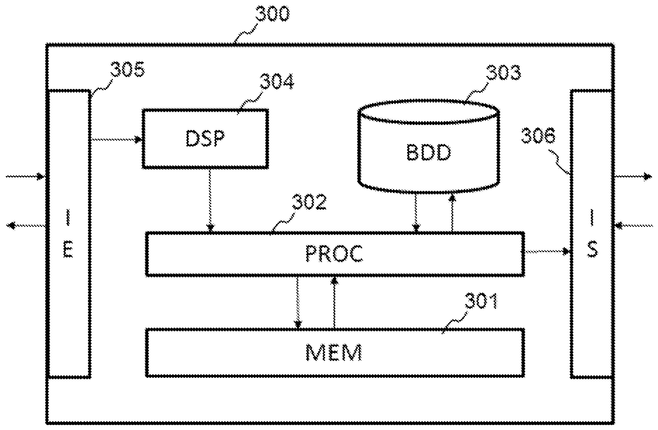

La figure 3 représente un exemple de dispositif d'assistance à l'utilisation d'un assistant vocal selon l'invention. Ce dispositif 300 peut prendre la forme d'un boitier comprenant des circuits imprimés, de plusieurs circuits imprimés reliés par des connections filaires ou non filaires, de tout type d'ordinateur ou encore d'un téléphone mobile. On entend par circuit imprimé tout type de dispositif apte à effectuer au moins une opération électrique ou électronique.

Le dispositif 300 comprend une mémoire vive 301 pour stocker des instructions pour la mise en oeuvre par un processeur 302 du procédé d'assistance à l'utilisation d'un assistant vocal tel que décrit ci-avant. Le dispositif comporte aussi une mémoire de masse 303 pour le stockage de données destinées à être conservées après la mise en oeuvre du procédé.

Le dispositif 300 peut en outre comporter un processeur de signal numérique (DSP) 304.

Une ou plusieurs des étapes du procédé peuvent être effectuées par des composants différents. Ainsi, le procédé peut être mis en oeuvre par une pluralité de processeurs, mémoire vive, mémoire de masse, interface d'entrée, interface de sortie et/ou DSP. Dans ces situations, le dispositif 300 peut être décentralisé, au sein d'un réseau local (plusieurs processeurs reliés entre eux par exemple) ou d'un réseau étendu.

Le dispositif comporte également une interface d'entrée 305 pour la réception notamment des données de contexte et une interface de sortie 306 pour la transmission des données.

Le dispositif d'assistance à l'utilisation d'un assistant vocal récupère un indicateur de performance relatif à la connexion (4G/.., débit observé lors de précédentes minutes) et au calculateur (cycle de boot ou démarrage). En fonction de l'indicateur, une icône ou un avatar représentatif d'un mode cloud performant ou dégradé est affiché.

Le dispositif d'assistance à l'utilisation d'un assistant vocal informe l'utilisateur de l'état du dialogue par une série d'indicateurs visuels qui expriment par exemple un état « en attente activation vocale », « je t'écoute », « je réfléchis », « je te réponds », etc.

En différentiant la série d'icône ou avatar en fonction de l'indicateur de performance, l'invention permet d'informer l'utilisateur du mode de reconnaissance vocale. Ainsi l'utilisateur est informé du mode performant ou dégradé du système vocal et peut adapter ces demandes. Le visuel peut informer de l'état de performance du système et de l'attente plus ou moins longue et plus ou moins performante.

L'indicateur est également dépendant de la disponibilité du service en phase de boot.

## Revendications

1. Procédé d'assistance à l'utilisation d'un assistant vocal comportant un module de reconnaissance vocale apte à exécuter une fonction reconnaissance vocale sur au moins un calculateur embarqué (12) du véhicule ou sur au moins un calculateur distant (14), le module étant apte à communiquer avec ledit au moins un calculateur distant (14), par l'intermédiaire d'une liaison sans fils (15), de façon à lui transmettre un signal représentatif de paroles à reconnaitre, comportant des étapes de :
- Réception (21) de données relatives à la liaison sans fils (15),
- Détermination (22) d'un indicateur de performance relatif à la reconnaissance vocale, à partir de données relatives à la liaison sans fils (15), **caractérisé en ce qu'**il comporte en outre des étapes de :
- Détermination (23) d'un objet graphique ou d'un message associé audit niveau de performance déterminé,
- Affichage (24) de l'objet graphique ou du message déterminé, de façon à informer un utilisateur de la performance de la reconnaissance vocale et **en ce qu'**il comprend en outre une étape de réception (25) de données relatives à un état du au moins un calculateur mettant en oeuvre la fonction de reconnaissance vocale et **en ce que** la détermination d'un indicateur de performance prend aussi en compte les données relatives à un état du au moins un calculateur.

2. Procédé d'assistance à l'utilisation d'un assistant vocal selon la revendication 1, caractérisé que les données relatives à la liaison sans fils (15) comportent au moins l'une des données suivantes : une bande passante, une latence, un taux d'erreur.

3. Procédé d'assistance à l'utilisation d'un assistant vocal selon l'une des revendications précédentes, caractérisé que si l'indicateur de performance correspond à un niveau pour lequel la reconnaissance vocale est effectuée par le calculateur distant (14), alors l'objet graphique ou le message correspondant indique à l'utilisateur que l'agent fonctionne dans un mode nominal.

4. Procédé d'assistance à l'utilisation d'un assistant vocal selon l'une des revendications précédentes, caractérisé que si l'indicateur de performance correspond à un niveau pour lequel la reconnaissance est effectuée par calculateur embarqué (12), alors l'objet graphique ou le message correspondant indique à l'utilisateur que l'agent fonctionne dans un mode dégradé.

5. Procédé d'assistance à l'utilisation d'un assistant vocal selon l'une des revendications précédentes, caractérisé que si l'indicateur de performance comporte un niveau pour lequel le calculateur embarqué est dans une phase de démarrage, alors l'objet graphique ou le message correspondant indique à l'utilisateur que l'agent est dans une phase de réveil.

6. Programme d'ordinateur comportant des instructions pour mettre en oeuvre le procédé d'assistance à l'utilisation d'un assistant vocal selon l'une des revendications précédentes, lorsqu'il est exécuté sur un ou plusieurs processeurs.

7. Dispositif d'assistance à l'utilisation d'un assistant vocal **caractérisé en ce qu'**il est configuré pour mettre en oeuvre le procédé d'assistance à l'utilisation d'un assistant vocal selon l'une des revendications 1 à 5.

8. Véhicule **caractérisé en ce qu'**il comporte un dispositif selon la revendication précédente.

## Patentansprüche

1. Verfahren zur Unterstützung der Nutzung eines Sprachassistenten, umfassend ein Spracherkennungsmodul, das in der Lage ist, eine Spracherkennungsfunktion auf mindestens einem Bordcomputer (12) des Fahrzeugs oder auf mindestens einem entfernten Computer (14) auszuführen in der Lage zu sein, über eine drahtlose Verbindung (15) mit dem mindestens einen entfernten Computer (14) zu kommunizieren, um ihm ein Signal zu übertragen, das für zu erkennende Wörter repräsentativ ist, mit den folgenden Schritten:
- Empfang (21) von Daten bezüglich der drahtlosen Verbindung (15),
- Bestimmung (22) eines Leistungsindikators bezüglich der Spracherkennung aus Daten bezüglich der drahtlosen Verbindung (15), **dadurch gekennzeichnet, dass** es weiterhin folgende Schritte umfasst:
- Bestimmen (23) eines grafischen Objekts oder einer Nachricht, die dem ermittelten Leistungsniveau zugeordnet ist,
- Anzeige (24) des grafischen Objekts oder der ermittelten Nachricht, um einen Benutzer über die Durchführung der Spracherkennung zu informieren, und dass es außerdem einen Schritt des Empfangens (25) von Daten umfasst, die sich auf einen Zustand des mindestens einen Rechners beziehen Implementieren der Spracherkennungsfunktion und dass bei der Ermittlung eines Leistungsindikators auch die Daten über einen Zustand des mindestens einen Taschenrechners berücksichtigt werden.

2. Verfahren zur Unterstützung der Nutzung eines Sprachassistenten nach Anspruch 1, **dadurch gekennzeichnet, dass** die Daten bezüglich der drahtlosen Verbindung (15) mindestens eine der folgenden Daten umfassen: eine Bandbreite, eine Latenz, eine Fehlerrate.

3. Verfahren zur Unterstützung der Nutzung eines Sprachassistenten nach einem der vorhergehenden Ansprüche, **dadurch gekennzeichnet, dass**, wenn der Leistungsindikator einem Level entspricht, für das eine Spracherkennung durch den Remote-Computer (14) durchgeführt wird, dann das entsprechende grafische Objekt bzw Die Meldung zeigt dem Benutzer an, dass der Agent im Nominalmodus arbeitet.

4. Verfahren zur Unterstützung der Nutzung eines Sprachassistenten nach einem der vorhergehenden Ansprüche, **dadurch gekennzeichnet, dass**, wenn der Leistungsindikator einem Niveau entspricht, für das eine Erkennung durch den Bordcomputer (12) erfolgt, dann das grafische Objekt bzw Die entsprechende Meldung weist den Benutzer darauf hin, dass der Agent in einem herabgesetzten Modus arbeitet.

5. Verfahren zur Unterstützung der Nutzung eines Sprachassistenten nach einem der vorhergehenden Ansprüche, **dadurch gekennzeichnet, dass**, wenn der Leistungsindikator einen Pegel umfasst, für den sich der Bordcomputer in einer Startphase befindet, dann die Objektgrafik oder das entsprechende Die Meldung zeigt dem Benutzer an, dass sich der Agent in einer Aufwachphase befindet.

6. Computerprogramm mit Anweisungen zur Umsetzung des Verfahrens zur Unterstützung der Nutzung eines Sprachassistenten nach einem der vorhergehenden Ansprüche, wenn es auf einem oder mehreren Prozessoren ausgeführt wird.

7. Vorrichtung zur Unterstützung bei der Nutzung eines Sprachassistenten, **dadurch gekennzeichnet, dass** sie zur Durchführung des Verfahrens zur Unterstützung bei der Nutzung eines Sprachassistenten nach einem der Ansprüche 1 bis 5 eingerichtet ist.

8. Fahrzeug **dadurch gekennzeichnet, dass** es eine Vorrichtung nach dem vorhergehenden Anspruch umfasst.

## Claims

1. Method for assisting the use of a voice assistant comprising a voice recognition module capable of executing a voice recognition function on at least one on-board computer (12) of the vehicle or on at least one remote computer (14), the module being able to communicate with said at least one remote computer (14), via a wireless connection (15), so as to transmit to it a signal representative of words to be recognized, comprising steps of:
- Reception (21) of data relating to the wireless connection (15),
- Determination (22) of a performance indicator relating to voice recognition, from data relating to the wireless connection (15), **characterized in that** it further comprises steps of:
- Determination (23) of a graphic object or a message associated with said determined performance level,
- Display (24) of the graphic object or the determined message, so as to inform a user of the performance of voice recognition and **in that** it further comprises a step of receiving (25) data relating to a state of the at least one calculator implementing the voice recognition function and **in that** the determination of a performance indicator also takes into account the data relating to a state of the at least one calculator.

2. Method of assisting the use of a voice assistant according to claim 1, characterized that the data relating to the wireless connection (15) comprises at least one of the following data: a bandwidth, a latency, an error rate.

3. Method of assisting the use of a voice assistant according to one of the preceding claims, characterized that if the performance indicator corresponds to a level for which voice recognition is carried out by the remote computer (14), then the corresponding graphic object or message indicates to the user that the agent is operating in a nominal mode.

4. Method of assisting the use of a voice assistant according to one of the preceding claims, characterized that if the performance indicator corresponds to a level for which recognition is carried out by on-board computer (12), then the graphic object or the corresponding message indicates to the user that the agent is operating in a degraded mode.

5. Method of assisting the use of a voice assistant according to one of the preceding claims, characterized that if the performance indicator includes a level for which the on-board computer is in a start-up phase, then the object graphic or the corresponding message indicates to the user that the agent is in a wake-up phase.

6. Computer program comprising instructions for implementing the method of assisting the use of a voice assistant according to one of the preceding claims, when executed on one or more processors.

7. Device for assisting in the use of a voice assistant **characterized in that** it is configured to implement the method for assisting in the use of a voice assistant according to one of claims 1 to 5..

8. Vehicle **characterized in that** it comprises a device according to the preceding claim.
